# EUROPEAN PATENT SPECIFICATION

(11) **EP 4 536 135 B1**
(45) Date of publication and mention of the grant of the patent: **29.04.2026**
(21) Application number: 23731270.7
(22) Date of filing: 07.06.2023
(51) Int. Cl.: A61C 19/00

(54) **SUPPORT UNIT FOR INTRAORAL SCAN DEVICE**
TRÄGEREINHEIT FÜR INTRAORALE SCANVORRICHTUNG
UNITÉ DE SUPPORT POUR DISPOSITIF DE BALAYAGE INTRA-ORAL

(30) Priority: 09.06.2022 EP 22178055
(43) Date of publication of application: 16.04.2025
(73) Proprietor: 3Shape A/S, 1060 Copenhagen K (DK)
(72) Inventor: BIRCH, Astrid, 1060 Copenhagen K (DK); MADSEN, Martin Storgaard, 1060 Copenhagen K (DK); ARNVED, Troels Böwadt, 1060 Copenhagen K (DK); NIELSEN, Mikael, 1060 Copenhagen K (DK); BODA, Nicolas, 1060 Copenhagen K (DK)
(74) Representative: Zacco Denmark A/S
(86) International application number: PCT/EP2023/065213
(87) International publication number: WO 2023/237598

(56) References cited:
- EP-A1- 3 067 010
- EP-A1- 3 067 010
- WO-A1-2017/096594
- WO-A1-2017/096594
- US-A1- 2014 255 868
- US-A1- 2014 255 868

## Description

### TECHNICAL FIELD

The present disclosure relates, generally, to a support unit for an intraoral scan device, and more particularly relates to a support unit that facilitates a horizontal positioning of the intraoral scan device.

### BACKGROUND

Intraoral scan devices are, generally, used by dentists to capture a direct optical impression of patient's teeth. During scanning or otherwise, the dentist may need to use one or more equipment. To use other equipment, the dentist positions the intraoral scan device on a table or a holding device. Existing holding devices include a vertically extending housing that facilitate a vertical positioning of the intraoral scan device. However, during scanning procedure, it is difficult for the dentist to position and remove the intraoral device from the holding device and on some occasions, the intraoral scan device may fall, which is undesirable. Accordingly, services of an assistant are generally used, which adds to the overall cost. Moreover, as the intraoral scan devices are inserted inside the mouth of the patient for performing scanning of teeth, the holding devices need to be properly cleaned after every scan. However, it is difficult to clean and disinfect the exiting holding devices.

Prior art is exemplified by EP 3 067 010 A1 which discloses a support unit for an intraoral scan device.

### SUMMARY

The invention is as defined in the appended claims.

One aspect of the disclosure is to provide a support unit for positioning and holding an intraoral scan device.

One aspect of the disclosure is a support unit that may be configured to support the intraoral scan device in a horizontal position, thereby reduces a risk of the intraoral scan device falling from the support unit.

One aspect of the disclosure is to provide a support unit for supporting an intraoral scan device that may be configured to facilitate a positioning and removal of the intraoral scan device by a medical practitioner during the medical procedure without any assistance from a second person. One aspect of the disclosure is to provide a support unit for intraoral scan device that may be configured to grip to an external surface on which the support unit is positioned.

One aspect of the disclosure is to provide a support unit which is configured to be easy to clean and disinfect.

These aspects are provided by a support unit that may include a rigid part having a first surface and a second surface opposed to the first surface, and a first flexible part that may be configured to be removably attached to the rigid part. The first flexible part may include at least a friction surface that may be configured to hold the intraoral scan device.

In some embodiments, a first surface of the first flexible part may be the friction surface that holds the intraoral scan device.

In some embodiments, to provide the friction surface of the first flexible part, the first flexible part may be made of a flexible material, for example, polymer, such as but not limited to, plastic, rubber, Silicone, soft plastic, for example, TPE (thermoplastic elastomer) or TPU (Thermoplastic polyurethane), or any other similar material known in the art.

In some embodiments, the rigid part may be made of a relatively hard material, for example, wood, metal, alloys, composite or any other similar material known in the art. This feature allows for an improved resistance against scratches and damage to the surface, thereby reducing the risk of bacteria hiding in grooves in the support unit.

In some embodiments, the rigid part may be made of aluminum to keep the support unit lightweight.

In some embodiments, the rigid part and the first and second flexible parts may be made from materials that have a relatively high resistance against scratches or damage to the surface.

In some embodiments, the rigid part and the first and second flexible parts may be treated with a treatment, such as coating, that improves the resistance against scratches or damage to the surface. This leads to lowering the risk of contamination such as bacteria to hide in parts or surfaces of the support unit, that become difficult to clean.

In some embodiments, the support unit may include a second flexible part configured to be removably attached to the second surface of the rigid part, and the first flexible part may be configured to be removably attached to the first surface.

In some embodiments, the second flexible part may be made of a flexible material, for example, polymer, such as but not limited to, plastic, rubber, Silicone, soft plastic, for example, TPE (thermoplastic elastomer) or TPU (Thermoplastic polyurethane), or any other similar material known in the art. The second flexible part may be made of the flexible material to provide increased friction between the second flexible part and an external surface on which the support unit may be positioned. The enhanced friction may allow a gripping of the support unit on the external surface.

In some embodiments, the support unit may be adapted for reprocessing.

In some embodiments, the reprocessing may include at least the first flexible part being detached from the rigid part, and cleaning of the first flexible part and the rigid part. This feature allows for an improved cleaning of the support unit.

In some embodiments, the reprocessing may comprise cleaning and disinfecting the support unit. In some embodiments, the reprocessing may comprise cleaning and disinfecting the rigid part, the first flexible part, and the second flexible part.

In some embodiments, for reprocessing the support unit, the first flexible part and the second flexible part may be separated from the rigid part. Separation of the support unit into the rigid part and into the first and second flexible parts, allows for an improved cleaning of the parts and thereby the support unit.

Cleaning and disinfecting of the separate parts ensure proper cleaning and removal of germs and other microscopic debris from support unit.

In some embodiments, the second flexible part of the support unit may comprise an inwardly going depression that may be configured to fit to an outwardly going bulge on the rigid part. This feature allows for an improved retaining of the second flexible part onto the rigid part.

In some embodiments, the second flexible part of the support unit may comprise an outwardly going bulge that may be configured to fit to an inwardly going depression on the rigid part.

In some embodiments, the rigid part may comprise an indentation extending between the first surface and the second surface of the rigid part. The indentation may allow an inward bending of a central portion of the first flexible part upon application of a force to enable a removal/disengagement of the first flexible part from the rigid part.

In some embodiments, the rigid part may comprise an indentation, extending along an axis orthogonal to the first or second surface of the rigid part.

In some embodiments, the indentation may be omitted.

In some embodiments, the rigid part may comprise a groove, extending between the first surface and the second surface of the rigid part. This feature allows for an improved support of an intraoral scan device resting on the support unit and reducing the risk of the intraoral scan device rolling to a side and falling off the support unit.

In some embodiments, the rigid part may comprise two grooves extending between the first surface and the second surface. This feature allows for an easier placement of an intraoral scan device on the support unit, allowing the user to choose between placing the intraoral scan device in two different orientations.

In some embodiments, two grooves may be arranged substantially perpendicularly to each other and may intersect each other at a central portion of the first surface of the rigid part.

In some embodiments, the first flexible part may have a first surface and a second surface. The first surface may be concave and may define at least one path that corresponds to the shape of the groove of the rigid part. The second surface of the first flexible part may be flat and may cover the indentation. This feature allows the first flexible part to be pushed downwardly towards the indentation, thereby bending the first flexible part at its edges, resulting in an easier removal of the first flexible part from the rigid part.

In some embodiments, the first surface may define two paths extending substantially perpendicularly to each other and intersecting at a central portion of the first flexible part. Two paths of the first flexible part may correspond to the shape of the two grooves of the rigid part and may align with the two grooves in the assembly of the first flexible part with the rigid part. In some embodiments, the groove may have a depth between 0.5 cm and 10 cm, and a width between 0.5 cm and 10 cm.

In some embodiments, the rigid part may comprise an opening in the second surface of the rigid part. This feature allows for an easier removal of the second flexible part, when the user pushes a finger through the opening and onto a surface of the second flexible part, thereby removing it from the rigid part.

In some embodiments, the rigid part may comprise an opening arranged in the indentation or the groove.

The opening facilitates a removal or disengagement of the second flexible part from the rigid part.

In some embodiments, the rigid part may comprise one or more protrusions configured to fit into one or more cavities in the first flexible part to enable a secure attachment or engagement of the first flexible part to the second flexible part. This feature may further enable a haptic and/or audible feedback signal that indicates a sufficiently proper engagement and retention of the first flexible part with the rigid part.

In some embodiments, the first flexible part may be configured to be connected flush with the rigid part.

In some embodiments, the rigid part may comprise bidirectional grooves at the first surface of the rigid part, and wherein the first flexible part may comprise a shape that corresponds to a shape of the bidirectional grooves and may be configured to be connected flush with the bidirectional grooves. The bidirectional grooves and the associated shape of the first flexible part may allow a positioning of the intraoral scan device from any orientation.

A bidirectional groove may include openings at both ends and may enable an insertion of the intraoral scan device inside the paths of the first flexible part from opposite directions.

In some embodiments, the rigid part may comprise a unidirectional groove or a bidirectional groove in the first surface of the rigid part.

The unidirectional groove may include an opening at one end, thereby a positioning of the intraoral scan device from one side may be enabled.

In some embodiments, the first flexible part may comprise a shape, that corresponds to a shape of the unidirectional groove or the bidirectional groove of the rigid part, and the first flexible part may be configured to be connected flush with the unidirectional groove or the bidirectional groove.

In some embodiments, a distance between an edge of the rigid part and the intersection between two grooves may be between 0.1 cm and 10 cm.

In some embodiments, all parts of the support unit may be adapted to be cleansed in an autoclave. This feature allows for an improved, more simple, more quick and more thorough cleaning and disinfecting of the support unit.

In some embodiments, the rigid part may be made of aluminum or an aluminum alloy, and the first and second flexible parts may be made of a silicone material.

In some embodiments, the first surface of the rigid part may comprise a groove having a geometry that corresponds to a geometry of the first flexible part, and the first flexible part may be configured to be connected flush with the first side of the rigid part.

In some embodiments, the number of grooves may depend on a circumferential distance between distal ends of two adjacent grooves. This feature allows for the support unit to comprise more grooves, thereby allowing the user to place an intraoral scan device in even more different orientations.

In some embodiment, the support unit may be made of single part made of a material similar to the material of the first flexible part. In such a case, a shape and geometry of a first surface of the support may correspond to the shape and geometry of the first surface of the first flexible part when arranged in assembly with the rigid part.

In some embodiments, a portion of the second flexible part may extend outwardly and downwardly of the second flexible part, and may enable a contact of the second flexible part with an external surface on which the support unit is positioned.

In some embodiments, the support unit may include the first flexible part and the rigid part only, and the second flexible part may be omitted.

In some embodiments, the second flexible part may be integrally formed with the rigid part and may be made of the material identical to that of the rigid part.

According to some aspects of the disclosure, a method for disassembling the support unit may include the steps of bending an area of the first flexible part towards the indentation, and removing the first flexible part from the support unit.

In some embodiments, the method may further include the steps of applying a force on a part of the second flexible part. The direction of the force may go through the opening. The method may also include the step of removing the second flexible part from support unit.

In some embodiments, the support unit may be configured to be dissembled such that at least a first part of the first flexible part may be configured to be bended towards the indentation, and at least a second part of the first flexible part may be configured to be separated from the rigid part consequently of the at least a first part of the first flexible part being bended towards the indentation.

In some embodiments, the second flexible part may be configured to be at least partly bendable towards or away from the opening. This feature allows for an easier engagement and disengagement of the second flexible part onto the rigid part.

In some embodiments, the second flexible part may be configured to be at least partly removed from the support unit, by applying a force to at least a part of the second flexible part, the force having a direction going through the opening.

According to another aspect a method for cleaning a support unit for an intraoral scan device may comprise the steps of separating the rigid part, the first flexible part, and the second flexible part, cleaning the separated parts with water and soap, wiping the separated parts with a cleaning and/or disinfecting wipe, and cleaning the separated parts in an autoclave.

According to another aspect a method for cleaning a support unit for an intraoral scan device may comprise the steps of separating the rigid part, the first flexible part, and the second flexible part, wiping the separated parts with a cleaning and/or disinfecting wipe, and cleaning the separated parts in an autoclave.

The support unit may further be configured to provide wireless charging of a battery of an intraoral scan device. This feature may enable a more convenient and more hygienic charging of the battery of an intraoral scan device.

### BRIEF DESCRIPTION OF THE ACCOMPANYING DRAWINGS

Having thus described example embodiments of the present disclosure in general terms, reference will now be made to the accompanying drawings, which are not necessarily drawn to scale, and wherein:
FIG. 1 illustrates a top perspective view of a support unit for holding an intraoral scan device, in accordance with an embodiment of the disclosure;
FIG. 2 illustrates a bottom perspective view of the support unit of FIG. 1, in accordance with an embodiment of the disclosure;
FIG. 3 illustrates an exploded view of the support unit depicting the top perspective views of the components of the support unit, in accordance with an embodiment of the disclosure;
FIG. 4 illustrates an exploded view of the support unit depicting the bottom perspective views of the components of the support unit, in accordance with an embodiment of the disclosure; and
FIG. 5 illustrates a sectional view of the support unit of FIG. 1, in accordance with an embodiment of the disclosure.

### DETAILED DISCRIPTION

In the following description, for purposes of explanation, numerous specific details are set forth in order to provide a thorough understanding of the present disclosure. It will be apparent, however, to one skilled in the art that the present disclosure can be practiced without these specific details. In other instances, apparatus and methods are shown in block diagram form only in order to avoid obscuring the present disclosure.

Reference in this specification to "one embodiment" or "an embodiment" means that a particular feature, structure, or characteristic described in connection with the embodiment is included in at least one embodiment of the present disclosure. The appearance of the phrase "in one embodiment" in various places in the specification are not necessarily all referring to the same embodiment, nor are separate or alternative embodiments mutually exclusive of other embodiments. Further, the terms "a" and "an" herein do not denote a limitation of quantity, but rather denote the presence of at least one of the referenced items. Moreover, various features are described which may be exhibited by some embodiments and not by others. Similarly, various requirements are described which may be requirements for some embodiments but not for other embodiments.

Some embodiments of the present disclosure will now be described more fully hereinafter with reference to the accompanying drawings, in which some, but not all, embodiments of the disclosure are shown. Indeed, various embodiments of the disclosure may be embodied in many different forms and should not be construed as limited to the embodiments set forth herein; rather, these embodiments are provided so that this disclosure will satisfy applicable legal requirements. Like reference numerals refer to like elements throughout.

The embodiments are described herein for illustrative purposes and are subject to many variations. Further, it is to be understood that the phraseology and terminology employed herein are for the purpose of the description and should not be regarded as limiting. Any heading utilized within this description is for convenience only and has no legal or limiting effect.

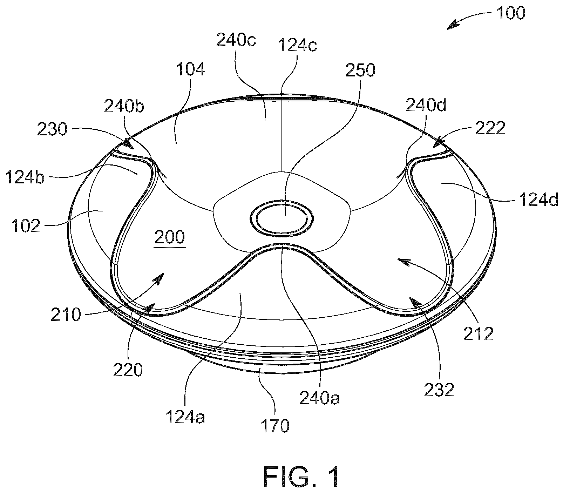

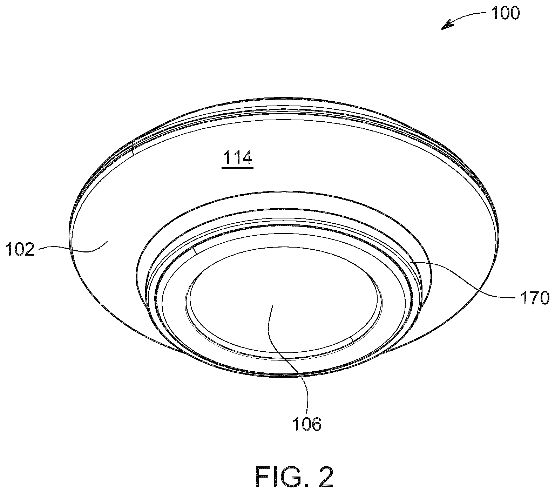

Referring to FIGS. 1 and 2, perspective views of a support unit (pod) 100 for positioning and retaining an intraoral scan device is shown. The support unit 100 is made by assembling multiple components, and includes a rigid part 102, a first flexible part 104, and a second flexible part 106. Although the support unit 100 is shown to include three separate components, it may be appreciated that the support unit 100 may include only two components, for example, the rigid part 102 and the first flexible part 104.

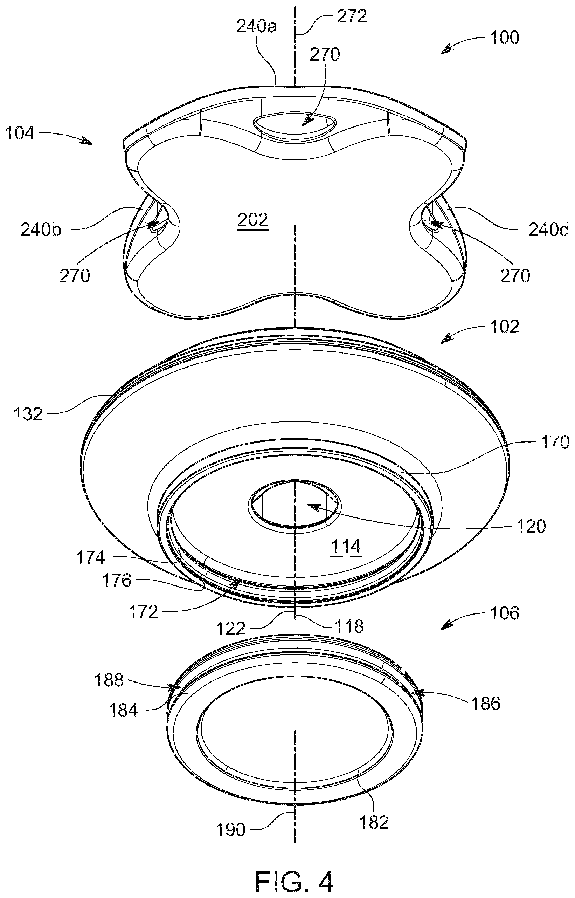

As shown in FIGS. 1 to 5, the rigid part 102 includes a base 110 having a first surface 112 (i.e., upper surface 112) and a second surface 114 (i.e., bottom surface 114) (best shown in FIG. 4) arranged opposite to the first surface 112. The rigid part 102 is made of aluminum or aluminum alloy, however, any other suitable material, for example, steel, copper, or any other metal or metallic alloy may also be contemplated. The rigid part and the first and second flexible parts may be made from materials that have a relatively high resistance against scratches or damage to the surface. The rigid part and the first and second flexible parts may further be treated with a treatment, such as coating, that improves the resistance against scratches or damage to the surface.

As shown, the rigid part 102 includes a substantially circular shape when viewed from top, and the base 110 comprises an indentation 116 extending downwardly inside the base 110 from the upper surface 112 towards the second surface 114. Accordingly, the indentation extends along an axis 118 that is orthogonal to the first surface 112 and/or second surface 114. The indentation 116 may be disposed substantially centrally to the upper surface 112 (i.e., the base 110), and includes a substantially concave shape. Moreover, the base 110 defines an opening 120 arranged coaxially with the indentation 116, and extending from the upper surface 112 to the bottom surface 114. The indentation 116 facilitates a disengagement of the first flexible part 104 from the rigid part 102, while the opening 120 enables a disengagement of the second flexible part 106 from the rigid part 102. A process/method of the disassembly of the support unit 100 is described later.

Additionally, the base 110 comprises a plurality of sidewalls extending upwardly from the upper surface 112 and arranged circularly around a central axis 122 of the base 110, and disposed spaced apart from each other. In the illustrated embodiment, four sidewalls 124a, 124b, 124c, 124d are shown, with a first sidewall 124a arranged diametrically opposite to a third sidewall 124c, and a second sidewall 124b disposed diametrically opposite to a fourth sidewall 124d. Also, each of the sidewalls 124a, 124b, 124c, 124d extends from an outer edge 132 of the rigid part 102 towards the indentation 116 in a radial direction. Accordingly, two diametrically extending channels 140, 142 (i.e., grooves 140, 142) are defined between the four sidewalls 124a, 124b, 124c, 124d, with a first groove 140 crossing/intersecting the second groove 142 at 90 degrees. Although two grooves 140, 142 are shown and contemplate, it may be appreciated that the rigid part 102 may include a single groove or more than two grooves. Also, the number of grooves depends upon a distance between the distal ends (i.e., ends of the grooves along the outer edge 132 of the rigid part 102) of two consecutive grooves 140, 142. In an embodiment, a width and/or length of each of the grooves 140, 142 is between 0.5 centimeters (cm) and 10 cm. Also, a depth of each of the grooves 140, 142 is between 0.5 cm and 10 cm.

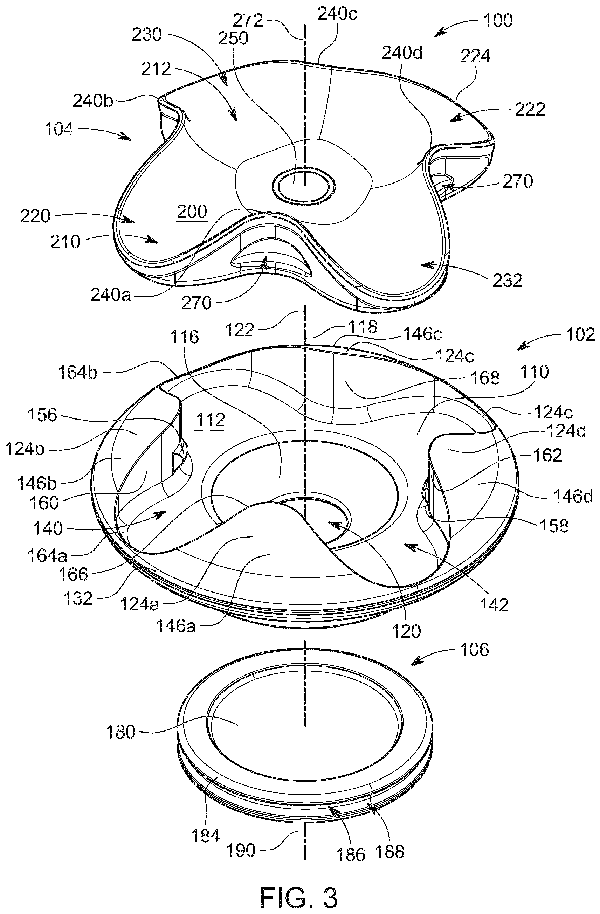

Moreover, each of the sidewalls 124a, 124b, 124c, 124d includes a shape of a sector of a sphere with respective outer surface 146a, 146b, 146c, 146d having a substantially curved shape. A distance of an apex of each of the sidewalls 124a, 124b, 124c, 124d from the outer edge 132 along the respective curved outer surface 146a, 146b, 146c, 146d is between 0.7cm and 11cm. Additionally, as shown in FIG. 3, two diametrically opposite sidewalls, for example, the second sidewall 124b and the third sidewall 124d, respectively, include a first protrusion 156 and a second protrusion 158 extending from respective inner surfaces 160, 162 towards the indentation 116 in the radial direction. Although only two protrusions 156, 158 are shown and contemplated, it may be appreciated that the rigid part 102 may include only one or, three, or four protrusions with one protrusion on each of the sidewalls 124a, 124b, 124c, 124d.

Further, the rigid part 102 may include raised portions arranged along the outer edge 132 between two adjacent sidewalls, for example, a first raised portion 164a arranged between the first sidewall 124a and the second sidewall 124b, a second raised portion 164b arranged between the second sidewall 124b and the third sidewall 124c, a third raised portion 164c arranged between the third sidewall 124c and the fourth sidewall 124d, and a fourth raised portion 164d arranged between the fourth sidewall 124d and the first sidewall 124a. The raised portions facilitate in retention of the first flexible part 104 inside the grooves 140, 142 and prevent sidewise movement of the first flexible part 104 relative to the rigid part 102. However, in embodiments, raised portions 164a, 164b, 164c, 164d may be omitted. Also, it may be appreciated that heights of the raised portions 164a, 164b, 164, c, 164d are less than heights of the sidewalls 124a, 124b, 124c, 124d. As shown in the figures, the sidewalls 124a, 124b, 124c, 124d are in one embodiment connected to the raised portions 164a, 164b, 164c, 164d respectively, thereby forming a continuous raised edge extending along the circumference of the rigid part 102 and along the outer edge 132, and extending above the first surface 112.

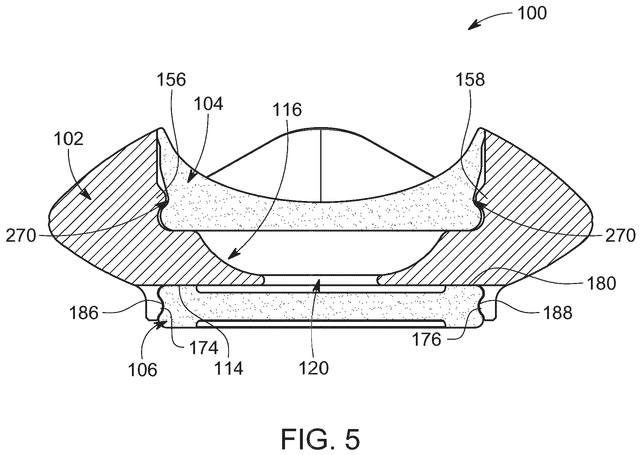

Further, as shown in FIG. 2, FIG. 4, and FIG. 5, the rigid part 102 includes a circular wall 170 arranged around the central axis 122 and extending outwardly and downwardly from the second surface 114 defining a recess 172 (shown in FIG. 4) for receiving the second flexible part 106. The recess 172 and the wall 170 are coaxial with the opening 120. Further, as shown in FIG. 4 and FIG. 5, the rigid part 102 includes an engagement structure 174, for example, a bulge 176, extending radially inwardly towards the central axis from an inner surface of the wall 170, to enable the engagement and retention of the second flexible part 106 with the rigid part 102 and inside the recess 172. The engagement structure 174 may extend circularly around the central axis 122 of the rigid part 102 and along the circumference of the wall 170.

Referring to FIGS. 3 and 4, the second flexible part 106 is a disk-shaped structure having a first surface 180 having a circular shape, a second surface 182 having a circular shape and arranged opposite to the first surface 180, and a vertical side surface 184 extending from the first surface 180 to the second surface 182. In an assembly of the second flexible part 106 with the rigid part 102, as shown in FIG. 5, the first surface 180 is arranged facing the opening 120, while the second surface 182 is adapted to rest on an external surface, for example, a surface of a table. The second flexible part 106 is made of a flexible material providing enhance friction between the second surface 182 and an external surface on which the support unit is positioned, and provides a better grip with the external surface. A height of the second flexible part 106 is selected such that a lower portion extends outwardly of the circular wall 170 of the rigid part 102 to enable the contact of the second surface 182 of the second flexible part 106 with the external surface when the support unit 100 is positioned on the external surface, for example, a table.

Further, as shown in FIGS. 3, 4, and 5 the side surface 184 defines a retention structure 186, for example, a depression 188, extending radially inwardly from the side surface 184. The depression 188 extends circularly around a central axis 190 of the second flexible part 106, and adapted to facilitate a secure retention of the second flexible part 106 within the recess 172 by receiving the bulge 176. Although the engagement structure 174 is shown as the bulge 176 and the retention structure 186 is shown and contemplated to be the depression 188, it may be appreciated that the engagement structure 174 may be the depression, while the retention structure 186 may be the bulge adapted to be insertion inside the slot when the second flexible part 106 is arranged inside the recess 172 of the rigid part 102. The second flexible part 106 is disengaged from the rigid part102 by disengaging the first flexible part 104 from the rigid part 102 and then pushing the second flexible part 106 out of the recess 172 by applying a force on the first surface 180 through the opening 120 of the rigid part 102.

Referring to FIG. 1, FIG. 3 and FIG. 4, the first flexible part 104 includes a first surface 200 (i.e., upper surface 200), shown in FIGS. 1 and 3, and a second surface 202 (i.e., lower surface 202), shown in FIG. 4 arranged opposite to the first surface 200. The first flexible part 104 is made of a flexible material that provides a friction surface for holding the intraoral scan device. The first surface 200 includes a shape and a geometry that corresponds to the grooves 140, 142 of the rigid part 102, while the second surface 202 is a flat surface adapted to abut the first surface 112 of the rigid part 102. The first surface 200 defines at least one path, for example, a first path 210 and a second path 212, for receiving and retaining the intraoral scan device. As shown, each of the first path 210 and the second path 212 includes a concave shape, and aligns with one of the grooves 140, 142 when the first flexible part 104 is assembled with the rigid part 102. In the assembly of the first flexible part 104 with the rigid part 102, the second surface of the first flexible part 104 abuts the first surface 112 of the rigid part 102. As shown in FIG. 4, the second surface 212 of the first flexible part 104 is a substantially flat surface.

Further, as shown in FIG. 1 and FIG. 3, the first path 210 includes a first radial opening 220 and a second radial opening 222 that are arranged at an outer edge 224 of the first flexible part 104. The first opening 220 and the second opening 222 are arranged diametrically opposite to each other. Accordingly, the intraoral scan device may be arranged inside the concave first path 210 through the first opening 220 or the second opening 222. Similarly, the second path 212 includes a third radial opening 230 and a fourth radial opening 232 that are arranged at the outer edge 224 of the first flexible part 104. The third opening 230 and the fourth opening 232 are arranged diametrically opposite to each other. Accordingly, the intraoral scan device may be arranged inside the concave second path 212 through the third opening 230 or the fourth opening 232. Accordingly, a shape of the first flexible part 104 may correspond to a shape of the first groove 140 and the second groove 142 of the rigid part and the first flexible part 104 is connected and flush with the first groove 140 and/or the second groove 142.

Due to the concave shape of the first path 210 and the second path 212, four sidewalls 240a, 240b, 240c, 240d of the first flexible part 104 are defined that abuts the inner surfaces 166, 160, 168, 162 of the sidewalls 124a, 124b, 124c, 124d of the rigid part 102 in the assembly of the first flexible part 104 and the rigid part 102. Moreover, the first path 210 and the second path 212 extend perpendicularly to each other and intersects each other at a central portion 250 of the first flexible part 104. In the assembly of the first flexible part 104 with the rigid part 102, the central portion 250 is arranged covering the indentation 116. Accordingly, when a downward force is applied at the central portion 250, the central portion 250 flexes inwardly and downwardly inside the indentation 116, resulting into the inward and upward flexing of the outer edge 224 of the first flexible part 104, and hence the sidewalls 240, 240b, 240c, 240d moves inwardly relative to the sidewalls 124a, 124b, 124c, 124d of the rigid part 102. Further, as shown in FIG. 4, an outer side surface of the first flexible part 104 defines a plurality of cavities 270 extending radially inwardly inside a body of the first flexible part 104. The cavities 270 are arrayed circularly around a central axis 272 of the first flexible part 104. In the illustrated embodiment, four cavities 270 are shown that are arranged 90 degrees apart from each other around the central axis. Accordingly, as shown in FIG. 5, the protrusions 156, 158 are arranged inside the two diametrically opposite arranged cavities 270 to enable a haptic and/or audible feedback signal that indicates a sufficiently proper engagement and retention of the first flexible part 104 with the rigid part 102.

A method for reprocessing/cleaning the support unit 100 is now described. For cleaning the support unit 100, a user separates the first flexible part 104 and the second flexible part 106 from the rigid part 102. The method for disassembling the first flexible part 104 and the second flexible part 106 is explained later in the description. After disassembling the three components from each other, the user cleans the parts 102, 104, 106 with water and soap. Thereafter, the user wipe each of the rigid part 102, the first flexible part 104, and the second flexible part 106 with cleaning and/or disinfecting wipes. In some embodiments, the step of cleaning the parts 102, 104, 106 with water and soap may be omitted. Subsequent to the wiping of the parts 102, 104, 106 with the suitable wipes, each of the rigid part 102, the first flexible part 104 and the second flexible part 106 is positioned inside an autoclave for cleaning. Inside the autoclave, the parts 102, 104, 106 are heated at a suitable temperature to disinfect, clean, and dry the surfaces of the parts 102, 104, 106.

A method for disassembling the support unit 100 is now described. For disassembly of the support unit 100, a user, at first, disengages the first flexible part 104 from the rigid part 102. For doing so, the user may apply a force in a downward direction i.e., push/bend the central portion 250 of the first flexible part 104 towards the indentation 116. In an embodiment, the user may push/press/bend the central portion 250 inside the indentation 116 using his/her finger. In response, an outer portion (i.e., the sidewalls 240a, 240b, 240c, 240d) of the first flexible part 104 gets disengaged from the rigid part 102 and moves inwardly in a radial direction i.e., away from the sidewalls 124a, 124b, 124c, 124d of the rigid part 102. Thereafter, the user may pull the first flexible part 104 by holding and pulling the outer portion of the first flexible part 104, for example, by pulling one of the sidewalls 240a, 240b, 240c, 240d of the first flexible part 104. In this manner, the user disengages the first flexible part 104 from the rigid part 102.

For removing/disengaging the second flexible part 106 from the rigid part 102, the user applies a push force on the first surface 180 through the opening 120 of the rigid part 102. In response to the force applied on the first surface 180 and due to the flexible nature of the second flexible part 106, the engagement structure 174 gets disengaged from the retention structure 186, causing the second flexible part 106 to move out of the recess 172. In this manner, the second flexible part 106 is disengaged from the rigid part 102 after removing the first flexible part 104 from the rigid part 102.

The support unit 100 may further be configured to provide wireless charging of a battery of an intraoral scan device. The support unit 100 may be provided with means configured to allow a wireless charging of an intraoral scan device.

Many modifications and other embodiments of the disclosures set forth herein will come to mind to one skilled in the art to which these disclosures pertain having the benefit of the teachings presented in the foregoing descriptions and the associated drawings. Therefore, it is to be understood that the disclosures are not to be limited to the specific embodiments disclosed and that modifications and other embodiments are intended to be included within the scope of the appended claims. Moreover, although the foregoing descriptions and the associated drawings describe example embodiments in the context of certain example combinations of elements and/or functions, it should be appreciated that different combinations of elements and/or functions may be provided by alternative embodiments without departing from the scope of the appended claims. In this regard, for example, different combinations of elements and/or functions than those explicitly described above are also contemplated as may be set forth in some of the appended claims. Although specific terms are employed herein, they are used in a generic and descriptive sense only and not for purposes of limitation.

## Claims

1. A support unit (100) for an intraoral scan device, wherein the support unit comprising:
a rigid part (102) having a first surface (112) and a second surface (114) opposed to the first surface,
a first flexible part (104) configured to be removably attached to the first surface of the rigid part, and
wherein the first flexible part includes at least a friction surface configured to hold the intraoral scan device, and the rigid part comprises a groove (140), extending between the first surface and the second surface of the rigid part, and the first flexible part has a first surface (200) and a second surface (202),
the first surface is concave and defines at least one path (210) that corresponds to the shape of the groove of the rigid part, the support unit being **characterised in that** the second surface is flat, and covers an indentation (116) in the rigid part.

2. A support unit according to claim 1, comprising a second flexible part (106), and the second flexible part is configured to be removably attached to the second surface of the rigid part.

3. A support unit according to any of the preceding claims, wherein the rigid part comprises one or more protrusions (156) configured to fit into one or more cavities (270) in the first flexible part.

4. A support unit according to any of the preceding claims, wherein the rigid part, the first flexible part, and a second flexible part (106) of the support unit, are separable.

5. A support unit according to any of the preceding claims, wherein the rigid part comprises the indentation extending between the first surface and the second surface of the rigid part.

6. A support unit according to any of the preceding claims, wherein the rigid part comprises the indentation, extending along an axis orthogonal to the first or second surface of the rigid part.

7. A support unit according to any of the preceding claims, wherein the rigid part comprises an opening (120) defining a hole between the first surface and the second surface of the rigid part.

8. A support unit according to any of the preceding claims, wherein the first flexible part is configured to be connected flush with the rigid part.

9. A support unit according to any of the preceding claims, wherein the rigid part comprises a unidirectional groove or a bidirectional groove in the first surface of the rigid part.

10. A support unit according to claim 9, wherein the first flexible part comprises a shape, that corresponds to a shape of the unidirectional groove or the bidirectional groove of the rigid part, and the first flexible part is configured to be connected flush with the unidirectional groove or the bidirectional groove.

11. A support unit according to any of the preceding claims, wherein all parts of the support unit are adapted to be cleansed in an autoclave.

12. A support unit according to any of the preceding claims, wherein the first surface of the rigid part comprises a groove having a geometry that corresponds to a geometry of the first flexible part, and the first flexible part is configured to be connected flush with the first side of the rigid part.

13. A support unit for an intraoral scan device according to claim 5 or 6, the support unit being configured to be disassembled, wherein:
at least a first part of the first flexible part being configured to be bended towards the indentation, and
at least a second part of the first flexible part being configured to be separated from the rigid part consequently of the at least a first part of the first flexible part being bended towards the indentation.

14. A support unit for an intraoral scan device according to any of the preceding claims, comprising means that allow a wireless charging of an intraoral scan device.

## Patentansprüche

1. Trägereinheit (100) für eine Intraoralscanvorrichtung,
wobei die Trägereinheit umfasst:
ein starres Teil (102) mit einer ersten Oberfläche (112) und einer zweiten Oberfläche (114), die der ersten Oberfläche gegenüberliegt,
ein erstes flexibles Teil (104), das so konfiguriert ist, dass es lösbar an der ersten Oberfläche des starren Teils befestigt wird, und
wobei das erste flexible Teil mindestens eine Reibungsoberfläche beinhaltet, die dazu konfiguriert ist, die Intraoralscanvorrichtung zu halten, und das starre Teil eine Nut (140) umfasst,
die sich zwischen der ersten Oberfläche und der zweiten Oberfläche des starren Teils erstreckt, und das erste flexible Teil eine erste Oberfläche (200) und eine zweite Oberfläche (202) aufweist, wobei die erste Oberfläche konkav ist und mindestens einen Pfad (210) definiert, der der Form der Nut des starren Teils entspricht, wobei die Trägereinheit **dadurch gekennzeichnet ist, dass** die zweite Oberfläche flach ist und eine Vertiefung (116) im starren Teil abdeckt.

2. Trägereinheit nach Anspruch 1, umfassend ein zweites flexibles Teil (106) und wobei das zweite flexible Teil so konfiguriert ist, dass es lösbar an der zweiten Oberfläche des starren Teils befestigt wird.

3. Trägereinheit nach einem der vorhergehenden Ansprüche, wobei das starre Teil eine oder mehrere Vorsprünge (156) umfasst, die dazu konfiguriert sind, in eine oder mehrere Hohlräume (270) im ersten flexiblen Teil zu passen.

4. Trägereinheit nach einem der vorhergehenden Ansprüche, wobei das starre Teil, das erste flexible Teil und ein zweites flexibles Teil (106) der Trägereinheit trennbar sind.

5. Trägereinheit nach einem der vorhergehenden Ansprüche, wobei das starre Teil die Vertiefung umfasst, die sich zwischen der ersten Oberfläche und der zweiten Oberfläche des starren Teils erstreckt.

6. Trägereinheit nach einem der vorhergehenden Ansprüche, wobei das starre Teil die Vertiefung umfasst, die sich entlang einer Achse erstreckt, die orthogonal zur ersten oder zweiten Oberfläche des starren Teils verläuft.

7. Trägereinheit nach einem der vorhergehenden Ansprüche, wobei das starre Teil eine Öffnung (120) umfasst, die ein Loch zwischen der ersten Oberfläche und der zweiten Oberfläche des starren Teils definiert.

8. Trägereinheit nach einem der vorhergehenden Ansprüche, wobei das erste flexible Teil so konfiguriert ist, dass es bündig mit dem starren Teil verbunden wird.

9. Trägereinheit nach einem der vorhergehenden Ansprüche, wobei das starre Teil eine unidirektionale Nut oder eine bidirektionale Nut in der ersten Oberfläche des starren Teils umfasst.

10. Trägereinheit nach Anspruch 9, wobei das erste flexible Teil eine Form umfasst, die einer Form der unidirektionalen Nut oder der bidirektionalen Nut des starren Teils entspricht, und das erste flexible Teil so konfiguriert ist, dass es bündig mit der unidirektionalen Nut oder der bidirektionalen Nut verbunden wird.

11. Trägereinheit nach einem der vorhergehenden Ansprüche, wobei alle Teile der Trägereinheit dafür konfiguriert sind, in einem Autoklaven gereinigt zu werden.

12. Trägereinheit nach einem der vorhergehenden Ansprüche, wobei die erste Oberfläche des starren Teils eine Nut mit einer Geometrie umfasst, die einer Geometrie des ersten flexiblen Teils entspricht, und das erste flexible Teil so konfiguriert ist, dass es bündig mit der ersten Seite des starren Teils verbunden wird.

13. Trägereinheit für eine Intraoralscanvorrichtung nach Anspruch 5 oder 6, wobei die Trägereinheit so konfiguriert ist, dass sie zerlegt werden kann, wobei:
mindestens ein erster Teil des ersten flexiblen Teils konfiguriert ist, um in Richtung der Vertiefung gebogen zu werden, und
mindestens ein zweiter Teil des ersten flexiblen Teils konfiguriert ist, um infolge des Biegens des mindestens einen ersten Teils des ersten flexiblen Teils in Richtung der Vertiefung vom starren Teil getrennt zu werden.

14. Trägereinheit für eine Intraoralscanvorrichtung nach einem der vorhergehenden Ansprüche, umfassend Mittel, die ein drahtloses Laden einer Intraoralscanvorrichtung ermöglichen.

## Revendications

1. Unité de support (100) pour un dispositif de balayage intra-buccal, l'unité de support comprenant :
une partie rigide (102) présentant une première surface (112) et une seconde surface (114) opposée à la première surface,
une première partie flexible (104) configurée pour être fixée de manière amovible à la première surface de la partie rigide, et
dans laquelle la première partie flexible inclut au moins une surface de friction configurée pour maintenir le dispositif de balayage intra-buccal, et la partie rigide comprend une rainure (140),
s'étendant entre la première surface et la seconde surface de la partie rigide, et la première partie flexible présente une première surface (200) et une seconde surface (202), la première surface est concave et définit au moins un chemin (210) qui correspond à la forme de la rainure de la partie rigide, l'unité de support étant **caractérisée en ce que** la seconde surface est plane, et recouvre un évidement (116) dans la partie rigide.

2. Unité de support selon la revendication 1, comprenant une seconde partie flexible (106), et la seconde partie flexible est configurée pour être fixée de manière amovible à la seconde surface de la partie rigide.

3. Unité de support selon l'une quelconque des revendications précédentes, dans laquelle la partie rigide comprend une ou plusieurs saillies (156) configurées pour s'ajuster dans une ou plusieurs cavités (270) dans la première partie flexible.

4. Unité de support selon l'une quelconque des revendications précédentes, dans laquelle la partie rigide, la première partie flexible, et une seconde partie flexible (106) de l'unité de support, sont séparables.

5. Unité de support selon l'une quelconque des revendications précédentes, dans laquelle la partie rigide comprend l'évidement s'étendant entre la première surface et la seconde surface de la partie rigide.

6. Unité de support selon l'une quelconque des revendications précédentes, dans laquelle la partie rigide comprend l'évidement, s'étendant le long d'un axe orthogonal à la première ou à la seconde surface de la partie rigide.

7. Unité de support selon l'une quelconque des revendications précédentes, dans laquelle la partie rigide comprend une ouverture (120) définissant un trou entre la première surface et la seconde surface de la partie rigide.

8. Unité de support selon l'une quelconque des revendications précédentes, dans laquelle la première partie flexible est configurée pour être raccordée en affleurement avec la partie rigide.

9. Unité de support selon l'une quelconque des revendications précédentes, dans laquelle la partie rigide comprend une rainure unidirectionnelle ou une rainure bidirectionnelle dans la première surface de la partie rigide.

10. Unité de support selon la revendication 9, dans laquelle la première partie flexible comprend une forme qui correspond à une forme de la rainure unidirectionnelle ou de la rainure bidirectionnelle de la partie rigide, et la première partie flexible est configurée pour être raccordée en affleurement avec la rainure unidirectionnelle ou la rainure bidirectionnelle.

11. Unité de support selon l'une quelconque des revendications précédentes, dans laquelle toutes les parties de l'unité de support sont adaptées pour être stérilisées dans un autoclave.

12. Unité de support selon l'une quelconque des revendications précédentes, dans laquelle la première surface de la partie rigide comprend une rainure présentant une géométrie qui correspond à une géométrie de la première partie flexible, et la première partie flexible est configurée pour être raccordée en affleurement avec le premier côté de la partie rigide.

13. Unité de support pour un dispositif de balayage intra-buccal selon la revendication 5 ou 6, l'unité de support étant configurée pour être démontée, dans laquelle :
au moins une première partie de la première partie flexible étant configurée pour être fléchie vers l'évidement, et
au moins une seconde partie de la première partie flexible étant configurée pour être séparée de la partie rigide du fait de la flexion de l'au moins une première partie de la première partie flexible vers l'évidement.

14. Unité de support pour un dispositif de balayage intra-buccal selon l'une quelconque des revendications précédentes, comprenant des moyens qui permettent une charge sans fil d'un dispositif de balayage intra-buccal.
